Europäisches Patentamt

European Patent Office

Office européen des brevets

(19)

(11) Veröffentlichungsnummer: **0 226 807**
**A2**

(12) # EUROPÄISCHE PATENTANMELDUNG

(21) Anmeldenummer: 86115821.0

(22) Anmeldetag: 14.11.86

(51) Int. Cl.⁴: **B 60 H 1/00**
**B 60 H 3/06**

(30) Priorität: 23.12.85 DE 3545866

(43) Veröffentlichungstag der Anmeldung:
01.07.87 Patentblatt 87/27

(84) Benannte Vertragsstaaten:
AT BE CH DE GB LI NL SE

(71) Anmelder: Hagenuk GmbH
Westring 431
2300 Kiel 1(DE)

(72) Erfinder: Buschmann, Harald
23 Altenholz
Gut Projensdorf(DE)

(74) Vertreter: Hansmann, Dierk, Dipl.-Ing.
Jessenstrasse 4
D-2000 Hamburg 50(DE)

(54) **Luftbehandlungsgerät zur Klimatisierung von Fahrzeugen.**

(57) Es wird hierbei Außenluft und Umluft über Luftfilter und Wärmetauscher durch einen Zuluftkanal dem Fahrzeuginnenraum zugeführt. Dabei sind Gebläse in den Zuführungen für Außen- Um- und Zuluft angeordnet, die derart abgestimmt sind, daß im Bereich zwischen Luftfilter und Wärmetauscher ein Druck entsprechend oder nahezu dem Umgebungsdruck einstellbar ist. Zur Veränderung des Mischungsverhältnisses von Außenluft und Umluft sind die zugehörigen Gebläse verstellbar, wobei über eine Regelanordnung eine Kopplung der Gebläse zur Einstellung eines konstanten Volumenstromes erfolgt.

EP 0 226 807 A2

8611 58 21. 0

0226807

## Luftbehandlungsgerät zur Klimatisierung von Fahrzeugen

Die Erfindung bezieht sich auf ein Luftbehandlungsgerät zur Klimatisierung von Fahrzeugen, wobei über Kanäle Außenluft und Umluft unter Zwischenschaltung eines Luftfilters sowie Wärmetauscher zum Kühlen und Heizen einem Fahrzeuginnenraum über einen Zuluftkanal mit einem Gebläse zuführbar ist.

Anordnungen dieser Art sind bekannt, wobei über eine Klappenanordnung die Mischung von Außen- und Umluft erfolgt, um beispielsweise auch die Außenluft zu konditionieren, falls das Energieangebot nicht mehr ausreicht. Es hat sich in der Praxis herausgestellt, daß diese bekannten mechanischen Ausbildungen störanfällig sind und nicht wartungsfrei ausgebildet werden können.

Die Aufgabe der Erfindung ist es, eine Anordnung der gattungsgemäßen Art zu schaffen, die eine mechanische Vereinfachung und eine Wartungserleichterung ermöglicht.

Die Lösung dieser Aufgabe erfolgt erfindungsgemäß dadurch, daß im Bereich zwischen Luftfilter und Wärmetauscher über Gebläse im Außenluft-, Umluft- und Zuluftkanal ein Druck entsprechend oder nahezu dem Umgebungsdruck einstellbar ist und steuerbare Gebläse für Außenluft um Umluft über eine Regelanordnung zur Einstellung eines konstanten Volumenzustromes gekoppelt sind.

Hierdurch ist es möglich, eine Luftmengensteuerung über Gebläse ohne Klappen durchzuführen und somit die gewünschte Klimatisierung zu erreichen.

Ferner wird vorgeschlagen, daß die Gebläse für Außenluft und Umluft zur Veränderung des Mischungsverhältnisses über ein Steuerorgan kontinuierlich oder diskret verstellbar sind.

Eine vorteilhafte Ausgestaltung besteht darin, daß Luftfilter mit Trägheitsabscheidung für Staub angeordnet sind und in der Staubaustragszone ein Überdruck einstellbar ist.

Um für den Fahrzeugbau eine günstige Ausbildung zu schaffen, wird vorgeschlagen, daß die verwendeten Elemente zu einer Kompakteinheit zusammengeschaltet sind.

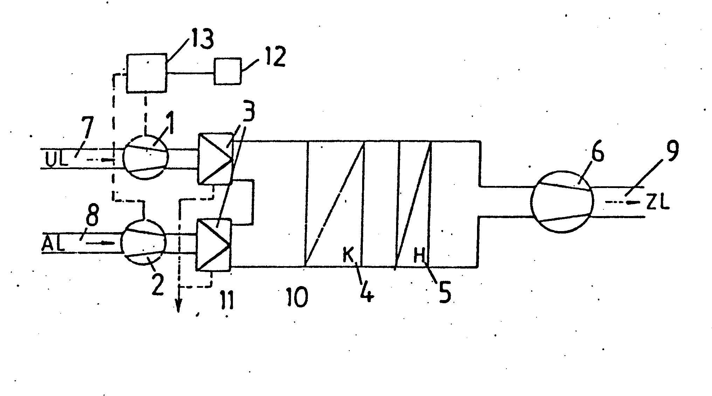

In der Zeichnung ist ein Ausführungsbeispiel der Erfindung in Form eines Schaltungsschemas dargestellt.

Bei der dargestellten Anordnung ist ein Umluftkanal 7 und ein Außenluftkanal 8 mit einem Gebläse 1 bzw. 2 über Luftfilter 3 und Wärmetauscher 4 und 5 zum Kühlen und Heizen mit einem Zuluftkanal 9 verbunden, der ein Gebläse 6 aufweist und mit dem Fahrzeuginnenraum in Verbindung steht. Alle Elemente sind als Kompakteinheit zusammengefaßt.

Die Gebläse 1, 2 und 6 sind derart abgestimmt, daß im Bereich 10 zwischen Luftfilter 3 und Wärmetauscher 4 ein Druck entsprechend oder nahezu dem Umgebungsdruck einstellbar ist. Dadurch ist es möglich, Luftfilter 3 nach dem Prinzip der Trägheitsabscheidung einzusetzen und sicherzustellen, daß in der Staubaustragszone noch ein zum Austreiben des abgeschiedenen Staubes erforderlicher Überdruck herrscht und zugleich keine Rückströmung im mit niedriger Drehzahl laufenden Gebläse auftritt. Der Staubaustrag erfolgt dabei über Leitungen 11.

0226807

Die Mischung von Außen- und Umluft wird über ein
Steuerorgan 12 durchgeführt, wobei zur Konstanthaltung
des zugeführten Luftstromes über eine Regelanordnung 13
die Gebläse 1 und 2 entsprechend einstellbar sind.

0226807

Patentansprüche

1. Luftbehandlungsgerät zur Klimatisierung von Fahrzeugen, wobei über Kanäle Außenluft und Umluft unter Zwischenschaltung eines Luftfilters sowie Wärmetauscher zum Kühlen und Heizen einem Fahrzeuginnenraum über einen Zuluftkanal mit einem Gebläse zuführbar ist, dadurch gekennzeichnet, daß im Bereich (10) zwischen Luftfilter (3) und Wärmetauscher (4) über Gebläse (1,2,6) im Außenluft- , Umluft- und Zuluftkanal (7,8,9) ein Druck entsprechend oder nahezu dem Umgebungsdruck einstellbar ist und steuerbare Gebläse (1,2) für Außenluft und Umluft über eine Regelanordnung (13) zur Einstellung eines konstanten Volumenzustromes gekoppelt sind.

2. Luftbehandlungsgerät nach Anspruch 1, dadurch gekennzeichnet, daß die Gebläse (1,2) für Außenluft und Umluft zur Veränderung des Mischungsverhältnisses über ein Steuerorgan (12) kontinuierlich oder diskret verstellbar sind.

3. Luftbehandlungsgerät nach Anspruch 1 oder 2, dadurch gekennzeichnet, daß Luftfilter (3) mit Trägheitsabscheidung für Staub angeordnet sind und in der Staubaustragszone eine Überdruck einstellbar ist.

4. Luftbehandlungsgerät nach einem der Ansprüche 1 bis 3, dadurch gekennzeichnet, daß die verwendeten Elemente (1-9) zu einer Kompakteinheit zusammengeschaltet sind.